# EUROPÄISCHE PATENTSCHRIFT

(11) **EP 2 464 539 B1**
(45) Veröffentlichungstag und Bekanntmachung des Hinweises auf die Patenterteilung: **11.12.2013**
(21) Anmeldenummer: 10752273.2
(22) Anmeldetag: 29.07.2010
(51) Int. Cl.: B60N 2/235, B60N 2/20

(54) **RASTBESCHLAG FÜR EINEN KRAFTFAHRZEUGSITZ**
DETENT FITTING FOR A MOTOR VEHICLE SEAT
FERRURE DE VERROUILLAGE POUR UN SIEGE DE VEHICULE AUTOMOBILE

(30) Priorität: 12.08.2009 DE 102009037247
(43) Veröffentlichungstag der Anmeldung: 20.06.2012
(73) Patentinhaber: Brose Fahrzeugteile GmbH & Co., 96450 Coburg (DE)
(72) Erfinder: FASSBENDER, Frank, 96450 Coburg (DE); STEFFEN, Oliver, 96450 Coburg (DE)
(74) Vertreter: Schröder, Christoph
(86) Internationale Anmeldenummer: PCT/DE2010/000902
(87) Internationale Veröffentlichungsnummer: WO 2011/018069

(56) Entgegenhaltungen:
- JP-A- 2008 212 538
- US-A1- 2002 033 627

## Beschreibung

Die Erfindung bezieht sich auf einen Rastbeschlag für Fahrzeugsitze mit den im Oberbegriff des Patentanspruchs 1 genannten Merkmalen.

Sitze dieser Art sind beispielsweise aus EP 1193110 A1 bekannt. Ein erstes Beschlagteil zur Verbindung mit einem ersten Sitzteil und ein zweites Beschlagteil zum Verbinden mit einem zweiten Sitzteil sind zueinander drehbar angeordnet. Das zweite Beschlagteil weist eine Verzahnung auf und am ersten Beschlagteil sind Riegel beweglich angeordnet, die zur Bildung einer Verrastung mit der Verzahnung des zweiten Beschlagteils in Eingriff kommen können. Zum Lösen der Verrastung werden die Riegel außer Eingriff mit der Verzahnung gebracht, so dass die beiden Beschlagteile zueinander drehbar sind. Es ist bekannt, dass die Riegel Steuerelemente in Form von seitlich aus den Riegeln hervorstehenden Zapfen/Nasen aufweisen. Ein solches Steuerelement ist vorgesehen, um eine Kraft auf den Riegel auszuüben, welche eine Bewegung des Riegels aus seiner verrasteten Position hinaus bewirkt. Zur Aufbringung der Kraft ist beispielsweise eine drehbare Steuerscheibe vorgesehen. Ein weiteres Steuerelement ist nötig, um den Riegel in einer bestimmten Position halten zu können. Dies ist beispielsweise dann nötig, wenn ein durch Federkraft bewirktes Verrasten des Riegels unterbunden werden soll. Eine entsprechend nötige Aufhaltekraft wird in bestimmten Drehpositionen des Rastbeschlages auf die zweiten Steuerelemente entweder von Elementen am ersten Beschlagteil, oder von einem mit dem ersten Beschlagteil verdrehbaren Freischwenkring aufgebracht. Liegen die Steuerelemente wie bei EP 1193110 A1 in einer Ebene, können die genannte Steuerscheibe und beispielsweise der Freischwenkring in einer Ebene liegen. Dies hat aber einen nennenswerten Raumbedarf in radialer Richtung zur Folge.

Zur Erreichung einer qualitativ hochwertigen Beschlagfunktion weisen die beiden genannten Steuerelemente einen voneinander verschiedenen Querschnitt auf. Das Steuerelement zum Hinausbewegen des Riegels aus seiner verrasteten Position hat eine stark abgerundete Querschnittsfläche, da so mittels einer Steuerkurve einer Steuerscheibe ein allmählicher Übergang von der verrasteten in die gelöste Position zu realisieren ist. Andererseits hat das Steuerelement zum Halten des Riegels in einer bestimmten Position eine eher kantige Querschnittsfläche. So werden exakte Übergänge erreicht, von einem Winkelbereich bei dem der Rastbeschlag aufgehalten werden soll zu einem Winkelbereich, in dem der Beschlag verriegelt werden kann.

Aus der JP 2008 212 538 A ist ein Rastbeschlag bekannt, der alle Merkmale des Oberbegriffes des Anspruchs 1 aufweist und bei dem an einem zweiten Beschlagteil zwei Sperrriegel und an einem ersten Beschlagteil ein sogenannter Memory-Mechanismus angeordnet ist. Die Sperrriegel weisen hierbei zwei Steuerelemente auf, von denen ein erstes Steuerelement mit einer Steuerscheibe und ein zweites Steuerelement mit einem sogenannten Memory-Ring des Memory-Mechanismus zusammenwirken.

Aus der US 2002/033 627 A1 ist eine Rastbeschlag bekannt, bei dem Sperrriegel an einem Beschlagteil angeordnet und zum Verriegeln des Rastbeschlags mit einer Verzahnung an einem anderen Beschlagteil in Eingriff gebracht werden können. An den Sperrriegeln ist jeweils ein Vorsprung angeordnet, der zum Definieren eines Freischwenkbereichs mit einem fest an dem anderen Beschlagteil angeformten, zusammen mit diesem verdrehbaren Freischwenkring zusammenwirkt.

Es ist Aufgabe der Erfindung, einen einfach zu fertigenden Rastbeschlag zu schaffen, der in radialer Richtung wenig Bauraum benötigt, dessen Riegel jedoch trotzdem die qualitativ hochwertige Realisierung beider o.g. Steuerungsaufgaben gestatten.

Zur Lösung dieser Aufgabe zeichnet sich der erfindungsgemäße Rastbeschlag durch die im Patentanspruch 1 angegebenen Merkmale aus.

Die beiden genannten Steuerelemente - einerseits zum Hinausbewegen der Riegel aus ihrer verrasteten Position und andererseits zum Halten der Riegel in einer bestimmten Position-weisen eine voneinander verschiedene Außenkontur auf, sind jedoch in etwa axialer Richtung des Rastbeschlages übereinander gelegen am Riegel angeordnet. Damit sind also beide Steuerelemente mittels eines Steuerzapfens ausgeführt. Die Steuerelemente sind wie an sich bekannt mit abgerundeter und eher schafkantiger Querschnittsfläche ausgeführt, womit eine qualitativ hochwertige Ausführung ihrer Steuerungsaufgaben gewährleistet ist. Dadurch, dass die Steuerelemente jedoch übereinander, also im gleichen radialen Abstand von der Drehachse des Rastbeschlages angeordnet sind, benötigen die Riegel eine geringe radiale Höhe, der Rastbeschlag kann also mit vergleichsweise geringem Durchmesser ausgeführt werden.

Zur Betätigung der Riegel des Rastbeschlages sind Elemente zur Betätigung der Riegel über seine beiden Steuerelemente in verschiedenen Ebenen, in axialer Richtung übereinander liegend angeordnet. Von Vorteil ist, wenn ein Steuerelement zum Lösen der Riegel aus der verrasteten Position und eine entsprechende Steuerscheibe riegelnahe, also unter dem Steuerelement zum Halten des Riegels in einer bestimmten Position angeordnet sind. Bei der Montage kann dann erst die Steuerscheibe eingelegt werden, welche an den Riegeln anliegt und diese etwas fixiert. Danach kann der Freischwenkring eingelegt bzw. das erste Beschlagteil montiert werden.

Die Riegel mit ihren Steuerelementen können vorteilhaft in einem Arbeitsgang als Sinterteile gefertigt werden. Dabei ist die Querschnittsfläche der Riegelnahen Steuerelemente größer als die der riegelfernen Steuerelemente. So ergeben sich bei den die beiden Steuerelemente bildenden Steuerzapfen keine Hinterschnitte.

Details der Erfindung ergeben sich aus der folgenden Beschreibung eines Ausführungsbeispiels Von den zugehörigen Zeichnungen zeigt:
- Fig. 1:: eine perspektivische Ansicht in einen erfindungsgemäßen Beschlag bei Weglassung des ersten Beschlagteiles und weiterer erfindungsunwesentlicher Details;
- Fig. 2:: einen Riegel des Rastbeschlags nach Fig. 1;
- Fig. 3:: eine Draufsicht auf den Rastbeschlag nach Fig. 1 bei in einer bestimmten Position gehaltenem Riegel.

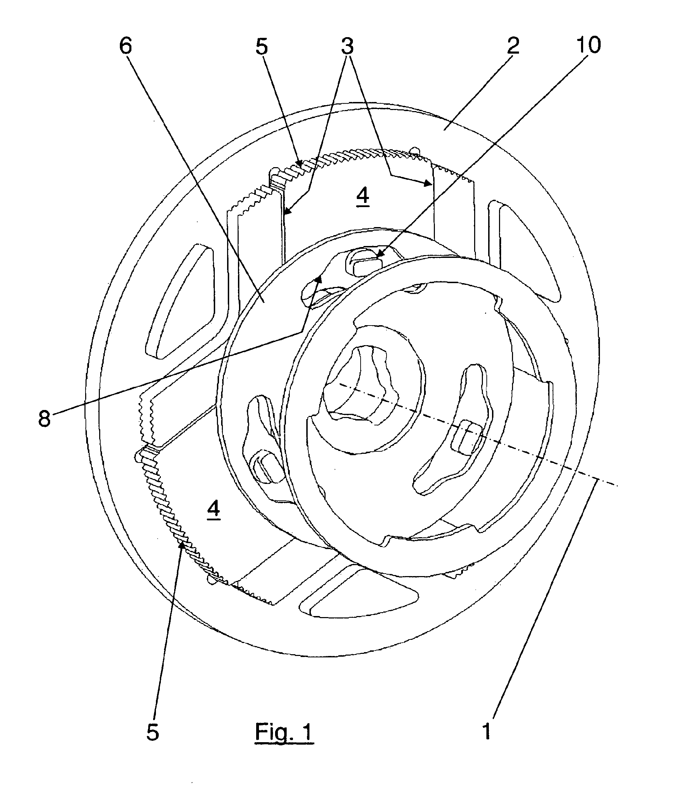

Fig. 1 zeigt einen geöffneten Rastbeschlag für Kraftfahrzeugsitze, wobei ein erstes Beschlagteil mit Innenverzahnung nicht dargestellt ist. Es ist wie bekannt um eine Drehachse 1 verdrehbar an einem zweiten Beschlagteil 2 angeordnet. Innerhalb von seitlichen Führungen 3 sind mehrere Riegel 4 in radialer Richtung verschiebbar in dem zweiten Beschlagteil 2 gelagert. Die Riegel 4 weisen an ihren äußeren Stirnflächen eine Verzahnung 5 auf. Sind die Riegel 4 radial nach außen verschoben, kommt die Verzahnung 5 in Eingriff mit der nicht gezeigten Innenverzahnung des ersten Beschlagteils, und somit ist ein Verdrehen der beiden Beschlagteile um die Drehachse 1 dann nicht möglich. Werden die Riegel 4 in Richtung der Drehachse 1 verschoben, löst sich die Verzahnung 5 aus der Innenverzahnung des ersten Beschlagteils und die beiden Beschlagteile sind relativ zueinander verdrehbar. Das erste Beschlagteil ist beispielsweise mit einer Sitzwanne und das zweite Beschlagteil mit einer Sitzlehne verbunden. Somit ist die Neigung der beiden Sitzelemente über den Rastbeschlag einstellbar.

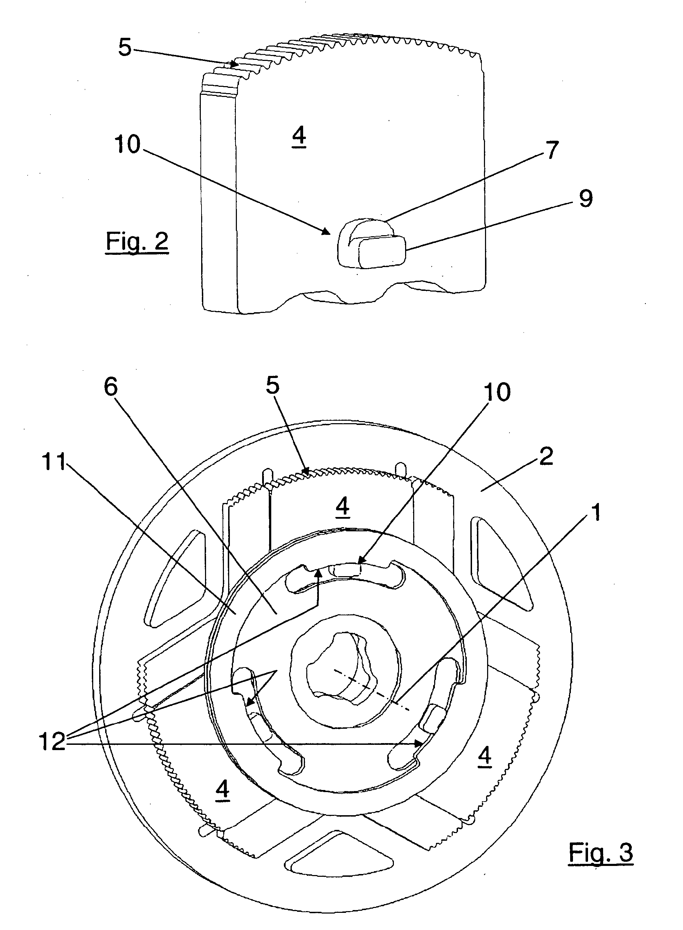

Die Riegel 4 werden durch nicht dargestellte Federn in ihre verrastete Position gedrückt. Um sie aus ihrer verrasteten Position hinauszubewegen, müssen die Riegel 4 entgegen Federkraft in Richtung der Drehachse 1 bewegt werden. Dies erfolgt, indem eine um die Drehachse 1 verdrehbare Steuerscheibe 6 mit ersten Steuerelementen 7 der Riegel 4 zusammenwirkt. Die Steuerscheibe 6 weist eine Kurvenbahn 8 je Riegel 4 auf und diese Kurvenbahnen 8 können mit den ersten, in Richtung der Drehachse 1 seitlich von den Riegeln 4 hervorstehenden Steuerelementen 7 zusammenwirken. Bei einem Verdrehen der Steuerscheibe 6 nähert sich die Kurvenbahn 8 im Bereich der Steuerelemente 7 der Drehachse 1, womit die Riegel 4 entgegen der Federkraft in Richtung der Drehachse 1 gezogen werden. Wie insbesondere aus Fig. 3 erkennbar ist, ist eine Querschnittsfläche der Steuerelemente 7 stark abgerundet. Damit ist gewährleistet, dass ein weiches, allmähliches Hinausziehen der Riegel 4 aus der Verzahnung des ersten Beschlagteiles erfolgt.

In Richtung der Drehachse 1 gesehen oberhalb der ersten Steuerelemente 7 sind an den Riegeln 4 zweite Steuerelemente 9 angeordnet. Diese zweiten Steuerelemente 9 sind zum Halten der Riegel 4 in einer bestimmten Position vorgesehen und haben eine kleinere und kantigere Querschnittsfläche als die ersten Steuerelemente 7 zum Hinausbewegen der Riegel 4 aus der verrasteten Position. Sie bilden mit den ersten Steuerelementen 7 einen von Hinterschnitten freien Steuerzapfen 10. Zur Interaktion mit den Steuerelementen 9 zum Halten der Riegel 4 in einer bestimmten Position ist ein Freischwenkring 11 koaxial zur Drehachse 1 im Beschlag angeordnet. Er liegt oberhalb der Ebene der Steuerscheibe 6 und weist entsprechend der Anzahl der Riegel 4 eine Anzahl von in Richtung der Drehachse weisenden Vorsprüngen 12 auf. Der Freischwenkring 11 wird beispielsweise vom ersten Beschlagteil bei dessen Verdrehung mit verdreht. Befinden sich dann - wie in Fig. 3 gezeigt - Vorsprünge 12 im Bereich der Steuerzapfen 10, können sich die Riegel 4 nicht mehr weg von der Drehachse 1 in Richtung der Verzahnung des ersten Beschlagteils bewegen und der Rastbeschlag kann also nicht verrasten. Die Beschlagteile sind frei zueinander verschwenkbar, was beispielsweise gewünscht ist, wenn eine Rückenlehne eines Fahrzeugsitzes nach vorne umgeklappt werden soll. De Rastbeschlag wird also durch Verdrehung der Steuerscheibe 6 geöffnet, und die Lehne kann verschwenkt werden. Wird dann ein auf die Steuerscheibe 6 einwirkender Betätigungshebel losgelassen, kommt es auf die Position des Freischwenkringes an, ob die Riegel 4 weiter in der geöffneten Position gehalten werden (Steuerelemente 9 liegen an den Vorsprüngen 12 an), oder einrasten können. Da es eine recht scharfe Abgrenzung zwischen diesen beiden Möglichkeiten und keinen undefinierten Übergangsbereich geben soll, sind die Steuerelemente 9 mit einer deutlich scharfkantigeren Querschnittsfläche versehen, als die Steuerelemente 7.

Die Riegel 4 mit den Steuerzapfen 10 sind vorzugsweise als Sinterteile gefertigt. Damit sind preiswert die gewünschten qualitativen Eigenschaften der Riegel 4 sowohl im Bereich der Verzahnung 5, als auch im Bereich der Steuerzapfen erreichbar. Die Riegel 4 können in radialer Richtung des Beschlages betrachtet flacher und damit leichter gestaltet werden, als Riegel mit von der Drehachse 1 aus gesehen übereinander liegenden getrennten Steuerelementen.

### Liste der Bezugszeichen

1- Drehachse
2- zweites Beschlagteil
3- Führungen
4- Riegel
5- Verzahnung
6- Steuerscheibe
7- Steuerelement
8- Kurvenbahn
9- Steuerelement
10- Steuerzapfen
11- Freischwenkring
12- Vorsprünge

## Patentansprüche

1. Rastbeschlag für einen Fahrzeugsitz zum Verrasten zweier Sitzteile, mit
- einem ersten Beschlagteil,
- einem um eine Drehachse (1) drehbar zum ersten Beschlagteil angeordneten zweiten Beschlagteil (2) und
- mehreren beweglich am zweiten Beschlagteil (2) angeordneten Riegeln (4), die zum Verrasten des ersten Beschlagteils mit dem zweiten Beschlagteil (2) in Eingriff mit einer Verzahnung des ersten Beschlagteils und zum Lösen der Verrastung außer Eingriff mit der Verzahnung des ersten Beschlagteils bringbar sind, wobei die Riegel (4) zwei mechanische Steuerelemente (7, 9) aufweisen, über die die Riegel (4) aus ihrer verrasteten Position hinausbewegt oder in einer bestimmten Position gehalten werden, wobei
die beiden Steuerelemente (7, 9) eine voneinander verschiedene Außenkontur aufweisen, etwa in Richtung der Drehachse (1) übereinander gelegen an den Riegeln (4) angeordnet und als ein Steuerzapfen (10) ausgeführt sind, **dadurch gekennzeichnet, dass** erste Steuerelemente (7) zum Hinausbewegen der Riegel (4) aus ihrer verrasteten Position mit einer um die Drehachse (1) verdrehbaren Steuerscheibe (6) und zweite Steuerelemente (9) zum Halten der Riegel (4) in einer bestimmten Position mit einem koaxial zur Drehachse (1) an dem ersten Beschlagteil angeordneten, vom ersten Beschlagteil bei einer Verdrehung mitverdrehten Freischwenkring (11) zusammenwirken.

2. Rastbeschlag nach Anspruch 1, **dadurch gekennzeichnet, dass** das Steuerelement (7) zum Hinausbewegen eines Riegels (4) aus seiner verrasteten Position näher am Riegel (4) liegt und eine größere Querschnittsfläche aufweist, als das darüber gelegene Steuerelement (9) zum Halten eines Riegels (4) in einer bestimmten Position.

3. Rastbeschlag nach Anspruch 1 oder 2, **dadurch gekennzeichnet, dass** eine Außenkontur des Steuerelementes (7) zum Hinausbewegen eines Riegels (4) aus seiner verrasteten Position in ihren Kräfte übertragenden Bereichen eine stärker abgerundete Form aufweist, als eine eher kantige Außenkontur des Steuerelementes (9) zum Halten eines Riegels (4) in einer bestimmten Position.

4. Rastbeschlag nach einem der Ansprüche 1 bis 3, **dadurch gekennzeichnet, dass** jeder Riegel (4) mit den Steuerelementen (7, 9) aus einem Sinterteil besteht.

## Claims

1. A detent fitting for a motor vehicle seat for latching two seat parts, comprising
- a first fitting part,
- a second fitting part (2) rotatably arranged about an axis of rotation (1) relative to the first fitting part, and
- a plurality of latches (4) movably arranged on the second fitting part (2), which for latching the first fitting part with the second fitting part (2) can be brought in engagement with a toothing of the first fitting part and for releasing the latching can be brought out of engagement with the toothing of the first fitting part, wherein the latches (4) include two mechanical control elements (7, 9) via which the latches (4) are moved out of their latched position or are held in a certain position,
wherein the two control elements (7, 9) have an outer contour different from each other, for example arranged one above the other on the latches (4) in direction of the axis of rotation (1), and are designed as control pins (10), **characterized in that** first control elements (7) for moving the latches (4) out of their latched position cooperate with a control disk (6) rotatable about the axis of rotation (1), and second control elements (9) for holding the latches (4) in a certain position cooperate with a freely pivoting ring (11) arranged on the first fitting part coaxially to the axis of rotation (1), which is rotated by the first fitting part during a rotation.

2. The detent fitting according to claim 1, **characterized in that** the control element (7) for moving a latch (4) out of its latched position is located closer to the latch (4) and has a greater cross-sectional area than the control element (9) located above the same for holding a latch (4) in a certain position.

3. The detent fitting according to claim 1 or 2, **characterized in that** an outer contour of the control element (7) for moving a latch (4) out of its latched position has a shape rounded more in its regions transmitting forces than a more angular outer contour of the control element (9) for holding a latch (4) in a certain position.

4. The detent fitting according to any of claims 1 to 3, **characterized in that** each latch (4) with the control elements (7, 9) consists of a sintered part.

## Revendications

1. Ferrure de verrouillage pour un siège de véhicule automobile pour le verrouillage de deux parties de siège, avec
- une première partie de ferrure,
- une seconde partie de ferrure (2) disposée de manière à pouvoir tourner autour d'un axe de rotation (1) par rapport à la première partie de ferrure et
- plusieurs verrous (4) disposés de manière mobile sur la seconde partie de ferrure (2) qui peuvent être engagés, pour le verrouillage de la première partie de ferrure avec la seconde partie de ferrure (2), avec une denture de la première partie de ferrure et désengagés, pour le détachement du verrouillage, de la denture de la première partie de ferrure,
les verrous (4) présentant deux éléments de commande (7, 9) mécaniques, par lesquels les verrous (4) sont déplacés hors de leur position verrouillée ou sont maintenus dans une position déterminée,
les deux éléments de commande (7, 9) présentant un contour extérieur différent l'un de l'autre, étant disposés placés l'un sur l'autre à peu près en direction de l'axe de rotation (1) sur les verrous (4) et étant réalisés comme un tenon de commande (10), **caractérisée en ce que** coagissent des premiers éléments de commande (7) pour le déplacement des verrous (4) hors de leur position verrouillée avec un disque de commande (6) pouvant effectuer une rotation autour de l'axe de rotation (1) et des seconds éléments de commande (9) pour le maintien des verrous (4) dans une position déterminée avec un anneau pivotant librement (11) disposé coaxialement à l'axe de rotation (1) sur la première partie de ferrure, tourné par la première partie de ferrure lors d'une rotation.

2. Ferrure de verrouillage selon la revendication 1, **caractérisée en ce que** l'élément de commande (7) se trouve plus près du verrou (4) pour le déplacement d'un verrou (4) hors de sa position verrouillée et présente une plus grande aire de section que l'élément de commande (9) placé dessus pour le maintien d'un verrou (4) dans une position déterminée.

3. Ferrure de verrouillage selon la revendication 1 ou 2, **caractérisée en ce qu'**un contour extérieur de l'élément de commande (7) présente pour le déplacement d'un verrou (4) hors de sa position verrouillée dans des zones transmettant ses forces une forme beaucoup plus arrondie qu'un contour extérieur plutôt anguleux de l'élément de commande (9) pour le maintien d'un verrou (4) dans une position déterminée.

4. Ferrure de verrouillage selon l'une quelconque des revendications 1 à 3, **caractérisée en ce que** chaque verrou (4) avec les éléments de commande (7, 9) se compose d'une partie frittée.
